# EUROPEAN PATENT APPLICATION

(11) **EP 4 542 216 A1**
(43) Date of publication of application: **23.04.2025**
(21) Application number: 24207030.8
(22) Date of filing: 16.10.2024
(51) Int. Cl.: G01N 27/904, G01N 27/9093

(54) **EDDY CURRENT PROBE ASSEMBLY**

(30) Priority: 16.10.2023 US 202318380589
(71) Applicant: RTX Corporation, Farmington, CT 06032 (US)
(72) Inventor: OUYANG, Zhong, Glastonbury 06033 (US); DRESCHER, Joseph D., Middletown 06457 (US); HARMON, Kim B., Bolton 06043 (US); SAWYERS-ABBOTT, Nigel D., South Glastonbury 06073 (US)
(74) Representative: Dehns

(57) **Abstract**

An eddy current probe assembly includes a flexible sheet (44), an eddy current probe array (46), and a liftoff spacing assembly (48). The flexible sheet (44) extends between and to a first side (58) and a second side (60). The eddy current probe array (46) includes a plurality of eddy current probes (70) disposed at the second side (60). The liftoff spacing assembly (48) is disposed at the plurality of eddy current probes (70). The liftoff spacing assembly (48) forms a liftoff distance (LD) between the plurality of eddy current probes (70) and a distal end (83) of the liftoff spacing assembly (48).

## Description

### BACKGROUND

### 1. Technical Field

This disclosure relates generally to an eddy current probe assembly and, more particularly, to flexible support and liftoff spacing assemblies for an eddy current probe array.

### 2. Background Information

Components for machinery may be inspected for cracks, defects, and other structural failures using non-destructive inspection equipment. For example, metallic and other electrically-conductive components may be inspected for structural failures using an eddy current probe. Various types and configurations of eddy current probes are known in the art. While these known eddy current probes have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an eddy current probe assembly includes a flexible sheet, an eddy current probe array, and a liftoff spacing assembly. The flexible sheet extends between and to a first side and a second side. The eddy current probe array includes a plurality of eddy current probes disposed at the second side. The liftoff spacing assembly is disposed at the plurality of eddy current probes. The liftoff spacing assembly forms a liftoff distance between the plurality of eddy current probes and a distal end of the liftoff spacing assembly.

In an embodiment of the above, the liftoff spacing assembly may include a plurality of studs disposed at the second side. Each stud of the plurality of studs may include a stud body extending a length from the flexible sheet to the distal end. The length forms at least a portion of the liftoff distance.

In a further embodiment of any of the above, each stud of the plurality of studs may further include a threaded fastener engaged with the flexible sheet.

In a further embodiment of any of the above, the liftoff spacing assembly may include a plurality of roller assemblies. Each roller assembly of the plurality of roller assemblies may include a roller extending a length from the flexible sheet to the distal end. The length forms at least a portion of the liftoff distance.

In a further embodiment of any of the above, each roller assembly of the plurality of roller assemblies may further include a first mount portion, a second mount portion, and a shaft. The first mount portion and the second mount portion may be disposed at the first side. The shaft may extend between and to the first mount portion and the second mount portion. The roller may be rotatably mounted on the shaft. The roller may extend through the flexible sheet to the distal end.

In a further embodiment of any of the above, the liftoff spacing assembly may include a sleeve, a deformable medium, and an inner flexible sheet. The sleeve may extend between and to an inner sleeve side and an outer sleeve side. The outer sleeve side may be disposed at the flexible sheet. The sleeve surrounds and forms an internal cavity. The deformable medium is disposed within the internal cavity. The inner flexible sheet is disposed at the inner sleeve side.

In a further embodiment of any of the above, the plurality of eddy current probes may have an average probe diameter less than 0.8 mm.

In a further embodiment of any of the above, the plurality of eddy current probes may have an average edge-to-edge distance between 0.05 mm and 0.2 mm.

In a further embodiment of any of the above, the eddy current probe assembly may further include a flexible support structure. The flexible support structure may include a plurality of rotatable pivot arms mounted to the flexible sheet at the first side.

In a further embodiment of any of the above, the plurality of rotatable pivot arms may include a primary pivot arm, a plurality of secondary pivot arms, and a plurality of tertiary pivot arms. Each secondary pivot arm of the plurality of secondary pivot arms is rotatably mounted to the primary pivot arm. Each tertiary pivot arm of the plurality of tertiary pivot arms is rotatably mounted to one secondary pivot arm of the plurality of secondary pivot arms. Each tertiary pivot arm of the plurality of tertiary pivot arms is mounted on the flexible sheet at the first side.

In a further embodiment of any of the above, the eddy current probe array may further include an electrically-conductive core layer disposed at the first side.

In a further embodiment of any of the above, the eddy current probe assembly may further include a controller including a processor in communication with a non-transitory memory storing instructions, which instructions when executed by the processor, may cause the processor to measure an output voltage of the sense coil of each eddy current probe of the plurality of eddy current probes.

In a further embodiment of any of the above, the instructions, when executed by the processor, may further cause the processor to direct an electrical current flow through the drive coil of each eddy current probe of the plurality of eddy current probes.

According to another aspect of the present disclosure, an eddy current probe assembly includes a flexible sheet, an eddy current probe array, a liftoff spacing assembly, and a controller. The flexible sheet extends between and to a first side and a second side. The eddy current probe array includes a plurality of eddy current probes disposed on the flexible sheet. Each eddy current probe of the plurality of eddy current probes includes a drive coil and a sense coil. The liftoff spacing assembly is mounted to the flexible sheet. The liftoff spacing assembly extends a length from the flexible sheet to a distal end of the liftoff spacing assembly outward of the flexible sheet and the eddy current probe array. The controller including a processor in communication with a non-transitory memory storing instructions, which instructions when executed by the processor, cause the processor to direct an electrical current flow through the drive coil of each eddy current probe of the plurality of eddy current probes and measure an output voltage of the sense coil of each eddy current probe of the plurality of eddy current probes.

In an embodiment of the above, the liftoff spacing assembly may include a plurality of studs disposed at the second side. Each stud of the plurality of studs may include a stud body extending the length from the flexible sheet to the distal end.

In a further embodiment of any of the above, the liftoff spacing assembly may include a plurality of roller assemblies. Each roller assembly of the plurality of roller assemblies include a roller extending the length from the flexible sheet to the distal end.

In a further embodiment of any of the above, the eddy current probe assembly may further include a sleeve, a deformable medium, and an inner flexible sheet. The sleeve may extend between and to an inner sleeve side and an outer sleeve side. The outer sleeve side may be disposed at the second side. The sleeve may surround and form an internal cavity. The deformable medium may be disposed within the internal cavity. The inner flexible sheet may be disposed at the inner sleeve side.

According to another aspect of the present disclosure, an eddy current probe assembly includes a flexible support structure, a flexible sheet, an eddy current probe array, and a liftoff spacing assembly. The flexible sheet is mounted to the flexible support structure. The flexible sheet extends between and to a first side and a second side. The eddy current probe array includes a plurality of eddy current probes disposed on the flexible sheet. The liftoff spacing assembly is mounted to the flexible sheet. The liftoff spacing assembly forms a liftoff distance between the plurality of eddy current probes and a distal end of the liftoff spacing assembly.

In an embodiment of the above, the flexible support structure may include a plurality of rotatable pivot arms. The plurality of rotatable pivot arms may include a primary pivot arm, a plurality of secondary pivot arms, and a plurality of tertiary pivot arms. Each secondary pivot arm of the plurality of secondary pivot arms may be rotatably mounted to the primary pivot arm. Each tertiary pivot arm of the plurality of tertiary pivot arms may be rotatably mounted to one secondary pivot arm of the plurality of secondary pivot arms. Each tertiary pivot arm of the plurality of tertiary pivot arms may be mounted on the flexible support structure at the first side.

In a further embodiment of any of the above, the liftoff spacing assembly may include one or more layers of Polytetrafluoroethylene (PTFE) tape disposed at the second side and on the plurality of eddy current probes.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of an exemplary component, in accordance with one or more embodiments of the present disclosure.
FIG. 2 illustrates a cross-sectional view of the exemplary component of FIG. 1 taken along Line 2-2 of FIG. 1, in accordance with one or more embodiments of the present disclosure.
FIG. 3 schematically illustrates an inspection system, in accordance with one or more embodiments of the present disclosure.
FIG. 4 illustrates a cutaway, side view of an eddy current probe assembly for the inspection system of FIG. 3, in accordance with one or more embodiments of the present disclosure.
FIG. 5 illustrates a bottom view of a portion of the eddy current probe assembly of FIG. 4, in accordance with one or more embodiments of the present disclosure.
FIG. 6 schematically illustrates an eddy current probe for the eddy current probe assembly of FIGS. 4 and 5, in accordance with one or more embodiments of the present disclosure.
FIG. 7 illustrates a bottom view of a liftoff spacing assembly for the eddy current probe assembly of FIGS. 4-5, in accordance with one or more embodiments of the present disclosure.
FIG. 8 illustrates a cutaway, side view of a portion of the liftoff spacing assembly of FIG. 7, in accordance with one or more embodiments of the present disclosure.
FIG. 9 illustrates a perspective view of another liftoff spacing assembly for the eddy current probe assembly of FIGS. 4-5, in accordance with one or more embodiments of the present disclosure.
FIG. 10 illustrates a cutaway, side view of a portion of the liftoff spacing assembly of FIG. 9, in accordance with one or more embodiments of the present disclosure.
FIG. 11 illustrates a cutaway, side view of another liftoff spacing assembly for an eddy current probe assembly, in accordance with one or more embodiments of the present disclosure.

### DETAILED DESCRIPTION

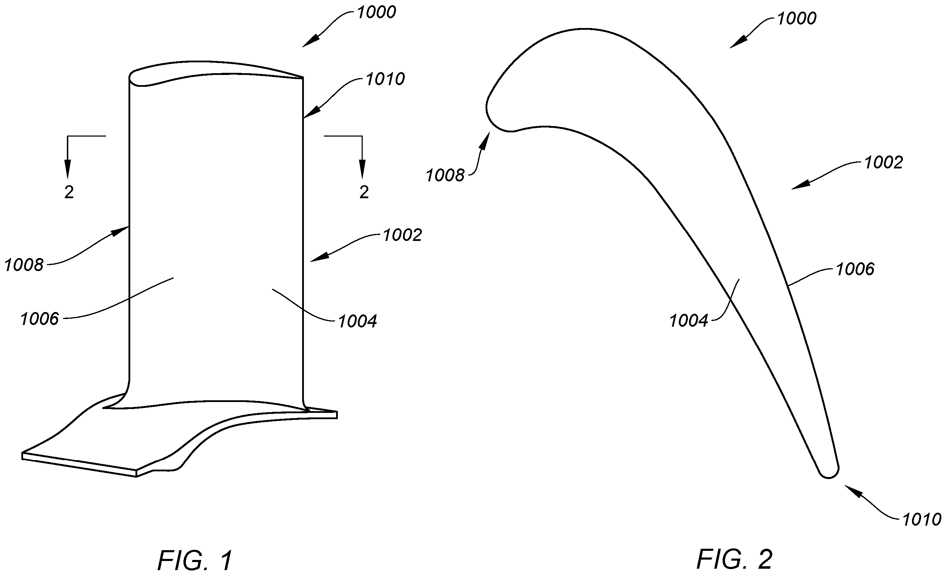

The present disclosure is directed to an eddy current probe assembly configured for identifying cracks or other defects in a metal or metal alloy component. FIGS. 1-2 illustrate an exemplary configuration of a component 1000 for which the present disclosure eddy current probe may be used to identify or otherwise detect cracks formed within a material of the component. The component 1000 of FIGS. 1-2 is an airfoil 1002 which may, for example, be configured for use as a rotor blade for an aircraft gas turbine engine turbine rotor. Alternatively, for example, the airfoil 1002 may be configured for use as a fixed vane for an aircraft gas turbine engine turbine section. The present disclosure, however, is not limited to the foregoing exemplary configuration of the component 1000, and the present disclosure eddy current probe may be used with any type or configuration of component 1000 compatible with eddy current probe operation and detection.

The component 1000 (e.g., the airfoil 1002) of FIGS. 1-2 includes a component body 1004. The component body 1004 includes a body material. The body material may form all or a substantial portion of the component body 1004. The body material may be a metal or metal alloy material configured to conduct an electrical current (e.g., an eddy current). For example, the body material may include a nickel-based alloy material. The component body 1004 forms component surface 1006 (e.g., an exterior surface) of the component 1000. The component body 1004 extends between and to a leading edge 1008 and a trailing edge 1010. The component surface 1006 forms the leading edge 1008 and the trailing edge 1010.

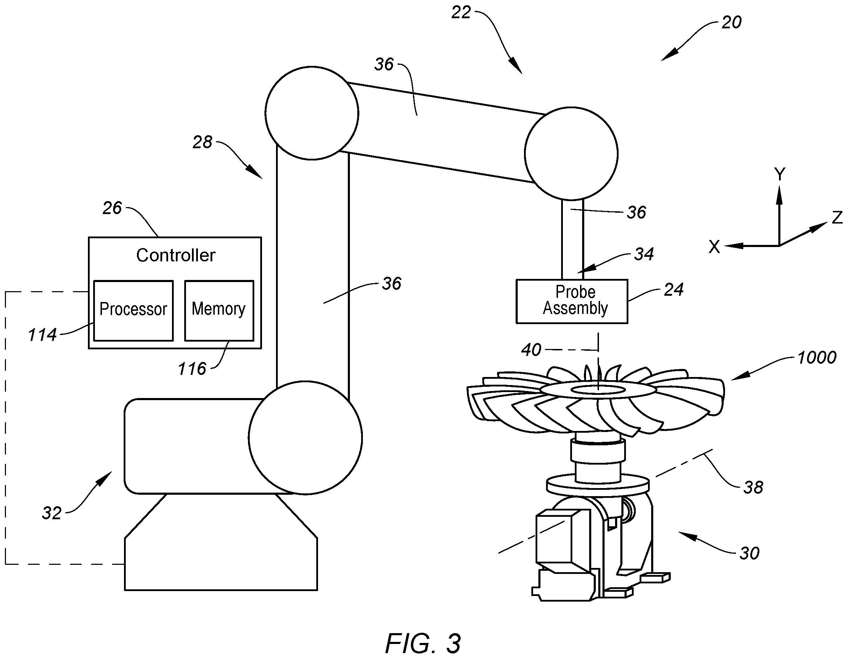

FIG. 3 illustrates an inspection system 20 of the present disclosure. The inspection system of FIG. 3 includes a positioning assembly 22, an eddy current probe assembly 24, and a controller 26.

The positioning assembly 22 of FIG. 3 includes a robotic arm 28 and a positioning fixture 30. The robotic arm 28 includes a base end 32, a distal end 34, and one or more movable joints 36. Each movable joint 36 may be moved or otherwise positioned, for example, by an independent servo motor or other actuator (not shown). The distal end 34 is connected to the eddy current probe assembly 24. The robotic arm 28 is configured to move the eddy current probe assembly 24 relative to a component, such as the component 1000. For example, the robotic arm 28 may be configured to move the eddy current probe assembly 24 along an x-axis, a y-axis, and/or a z-axis, as well as to rotate the eddy current probe assembly 24 relative to the x-axis, the y-axis, and/or the z-axis (e.g., pitch, yaw, and roll). The positioning fixture 30 is configured to securely retain and position a component, such as the component 1000, for an inspection process using the eddy current probe assembly 24. The positioning fixture 30 may be configured to rotate the component 1000 relative to one or more axes. For example, the positioning fixture 30 may be configured to rotate the component 1000 about a first axis 38 and/or a second axis 40 as shown in FIG. 3. To be clear, the positioning assembly 22 configuration of FIG. 3 is exemplary, and the present disclosure inspection system 20 is not limited to use with the particular positioning assembly 22 configuration of FIG. 3.

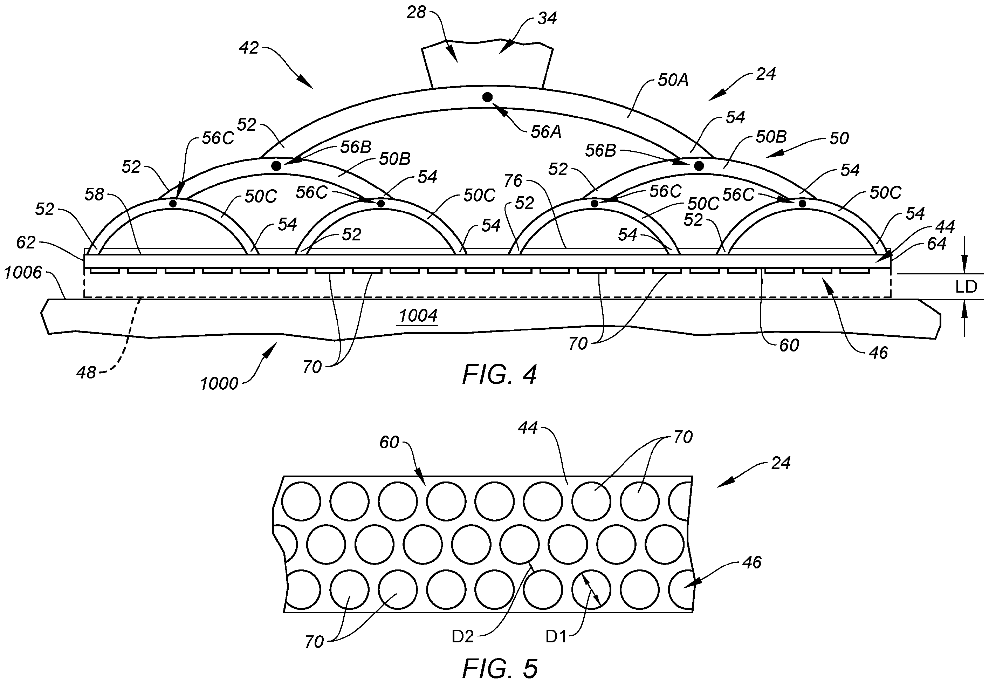

FIGS. 4 and 5 illustrate the eddy current probe assembly 24. The eddy current probe assembly 24 of FIGS. 4 and 5 includes a flexible support structure 42, a flexible sheet 44, an eddy current probe array 46, and a liftoff spacing assembly 48. FIG. 4 illustrates a side view of the eddy current probe assembly 24. FIG. 5 illustrates a bottom view of a portion of the eddy current probe assembly 24 showing the eddy current probe array 46 on the flexible sheet 44 with the liftoff spacing assembly 48 omitted for clarity.

The flexible support structure 42 of FIG. 4 includes a plurality of pivot arms 50. Each of the pivot arms 50 extends between and to a first pivot arm end 52 and a second pivot arm end 54. Each of the pivot arms 50 may have a curved shape extending between and to the first pivot arm end 52 and the second pivot arm end 54. For example, as shown in FIG. 4, each of the pivot arms 50 may have a concave curved shape facing toward the flexible sheet 44.

The pivot arms 50 of FIG. 4 include a primary pivot arm 50A, a plurality of secondary pivot arms 50B, and a plurality of tertiary pivot arms 50C. The primary pivot arm 50A is pivotably mounted to the robotic arm 28. For example, the primary pivot arm 50A may be pivotably mounted to the robotic arm 28 at (e.g., on, adjacent, or proximate) the distal end 34. The primary pivot arm 50A is pivotably mounted to the robotic arm 28 at a pivot point 56A (e.g., using a mechanical fastener, bearing, or other suitable mounting hardware). The pivot point 56A is disposed at an intermediate portion of the primary pivot arm 50A between the first pivot arm end 52 and the second pivot arm end 54 of the primary pivot arm 50A. The secondary pivot arms 50B are pivotably mounted to the primary pivot arm 50A. For example, each of the secondary pivot arms 50B may be pivotably mounted to the primary pivot arm 50A at one of the first pivot arm end 52 or the second pivot arm end 54 of the primary pivot arm 50A. The secondary pivot arms 50B are pivotably mounted to the primary pivot arm 50A at a pivot point 56B (e.g., using a mechanical fastener, bearing, or other suitable mounting hardware). The pivot point 56B is disposed at an intermediate portion of each of the secondary pivot arms 50B between the first pivot arm end 52 and the second pivot arm end 54 of each of the secondary pivot arms 50B. The tertiary pivot arms 50C are pivotably mounted to the secondary pivot arms 50B. For example, each of the tertiary pivot arms 50C may be pivotably mounted to one of the secondary pivot arms 50B at one of the first pivot arm end 52 or the second pivot arm end 54 of a respective one of the secondary pivot arms 50B. The tertiary pivot arms 50C are pivotably mounted to the secondary pivot arms 50B at a pivot point 56C (e.g., using a mechanical fastener, bearing, or other suitable mounting hardware). The pivot point 56C is disposed at an intermediate portion of each of the tertiary pivot arms 50C between the first pivot arm end 52 and the second pivot arm end 54 of each of the tertiary pivot arms 50C. The present disclosure, however, is not limited to the foregoing exemplary configuration of the plurality of pivot arms 50 of the flexible support structure 42. While the tertiary pivot arms 50C of FIG. 4 are shown extending substantially parallel to the secondary pivot arms 50B in a direction between and to the first pivot arm end 52 and the second pivot arm end 54, respectively, the tertiary pivot arms 50C may alternatively be orientated orthogonally or at any other angle relative to the secondary pivot arms 50B.

The flexible sheet 44 extends between and to a first side 58 of the flexible sheet 44 and a second side 60 of the flexible sheet 44. The flexible sheet 44 extends between and to a first longitudinal end 62 of the flexible sheet 44 and a second longitudinal end 64 of the flexible sheet 44. The flexible sheet 44 extends between and to a first lateral end 66 of the flexible sheet 44 and a second lateral end 68 of the flexible sheet 44. The flexible sheet 44 is mounted (e.g., fixedly mounted) to the flexible support structure 42 (e.g., the tertiary pivot arms 50C) at (e.g., on, adjacent, or proximate) the first side 58. The flexible sheet 44 is formed entirely or in substantial part by a flexible sheet material. Examples of the flexible sheet 44 material include polymeric materials (e.g., a thermoset or a thermoplastic polymer material).

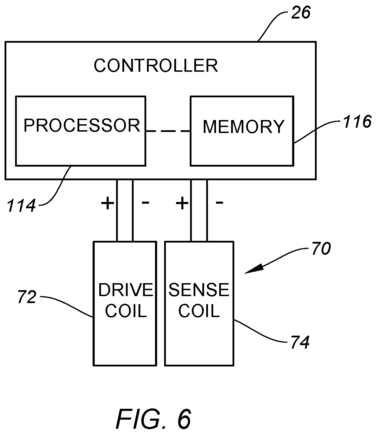

The eddy current probe array 46 includes a plurality of eddy current probes 70 distributed along the second side 60. For example, as shown in FIGS. 4 and 5, the eddy current probes 70 may be distributed as an array extending substantially between and to the first longitudinal end 62 and the second longitudinal end 64 and substantially between and to the first lateral end 66 and the second lateral end 68. FIG. 6 schematically illustrates an exemplary configuration of one of the eddy current probes 70. The eddy current probe 70 of FIG. 6 includes a drive coil 72 and a sense coil 74. Each of the drive coil 72 and the sense coil 74 are electrically connected to the controller 26. Each of the drive coil 72 and the sense coil 74 may be formed, for example, by a wire (e.g., insulated copper wire), printed conductive material, or another suitable electrical conductor. The drive coil 72 and the sense coil 74 may be mounted to, formed on (e.g., printed on), or otherwise disposed at (e.g., on, adjacent, or proximate) the flexible sheet 44 (e.g., the second side 60).

The eddy current probe array 46 may include a core layer 76 disposed at (e.g., on, adjacent, or proximate) the first side 58. The core layer 76 is an electrically-conductive layer. The core layer 76 may be formed, for example, by an electrically-conductive tape (e.g., a ferrite tape) disposed on the first side 58. Alternatively, the drive coil 72 and/or the sense coil 74 may include a conductive core with the wire, printed conductive material, or another suitable electrical conductor of the drive coil 72 and/or the sense coil 74 wound about or otherwise surrounding the conductive core. The conductive core may be formed, entirely or in substantial part, by a ferromagnetic metal or metal alloy (e.g., iron or iron alloy) or a ferrimagnetic compound.

The eddy current probes 70 of the eddy current probe array 46 have a diameter D1 and an edge-to-edge distance D2. The diameter D1 may be an average diameter of the eddy current probe array 46 for each of the eddy current probes 70. The edge-to-edge distance D2 is a distance between adjacent eddy current probes 70. The edge-to-edge distance D2 may be an average edge-to-edge distance of the eddy current probe array 46 for each of the eddy current probes 70. The diameter D1 of the eddy current probes 70 may be less than 1.2 millimeters (mm) and, more preferably, less than 0.8 mm. The edge-to-edge distance D2 may be less than 0.5 mm and, more preferably, between 0.05 mm and 0.2 mm.

The liftoff spacing assembly 48 is disposed at (e.g., on, adjacent, or proximate) the second side 60. The liftoff spacing assembly 48 is configured to contact a component surface 1006 of the component body 1004 and to facilitate positioning of the eddy current probes 70 at a liftoff distance LD between the eddy current probes 70 and the component surface 1006 as the eddy current probe assembly 24 (e.g., the liftoff spacing assembly 48) moves along the component surface 1006. As will be discussed in further detail, the liftoff distance LD between the eddy current probes 70 and the component surface 1006 facilitates the identification of cracks or other defects in the component body 1004 as the eddy current probe assembly 24 moves along the component surface 1006. A suitable liftoff distance LD may be in the range of approximately 0.075 mm to approximately 0.25 mm. However, the present disclosure is not limited to any particular range for the liftoff distance LD and suitable values of the liftoff distance LD may vary based, for example, on the configuration of the component 1000 or the eddy current probe array 46 and its eddy current probes 70 (e.g., eddy current probe diameter, eddy current probe edge-to-edge distances, eddy current probe magnetic field strength, component material, etc.).

In some embodiments, the liftoff spacing assembly 48 may be formed by one or more layers of a low-friction tape applied to the second side 60. The low-friction tape includes, for example, a low-friction material such as, but not limited to, Polytetrafluoroethylene (PTFE) (e.g., a material sold under the trade name TEFLON (E.I. Du Pont De Nemours and Co. of Wilmington, DE)). The present disclosure, however, is not limited to a PTFE material for the low-friction tape. The low-friction tape may additionally be applied to the eddy current probes 70 to retain the eddy current probes 70 in position at (e.g., on, adjacent, or proximate) the second side 60. The one or more layers of the low-friction tape may be applied to the second side 60 to form the liftoff spacing assembly 48 with the liftoff distance LD suitable for crack or other defect identification using the eddy current probe array 46. The low-friction tape may wear over time through contact with the component surface 1006 and may occasionally be replaced. Removal of worn low-friction tape from the second side 60 and, particularly, the eddy current probes 70 may be difficult and, in some cases, may cause damage to one or more of the eddy current probes 70.

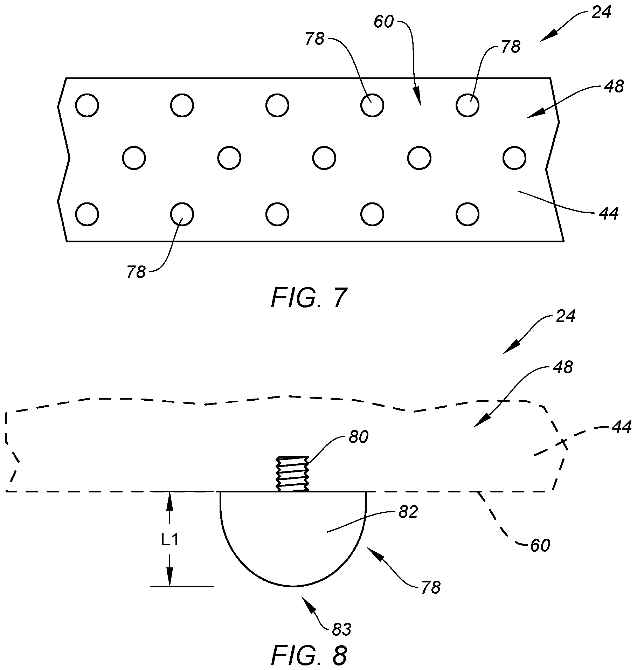

FIGS. 7 and 8 illustrate another exemplary configuration of the liftoff spacing assembly 48. The liftoff spacing assembly 48 of FIGS. 7 and 8 includes a plurality of studs 78 (e.g., spacer studs). FIG. 7 illustrates a portion of the second side 60 and the studs 78. FIG. 8 illustrates a side view of one of the studs 78 relative to the flexible sheet 44. As shown in FIG. 7, the studs 78 are distributed across the second side 60. The studs 78 may be mounted to the flexible sheet 44 at (e.g., on, adjacent, or proximate) the second side 60. For example, as shown in FIG. 8, each of the studs 78 may include a threaded fastener 80 engaged with the flexible sheet 44 to facilitate installation and removal of the studs 78 from the flexible sheet 44. Alternatively, the studs 78 may be formed by the flexible sheet 44 at (e.g., on, adjacent, or proximate) the second side 60 such that the flexible sheet 44 and the studs 78 form a unitary component. In this configuration, the entire flexible sheet (e.g., with the studs 78) may be replaceable as the studs 78 experience wear. The studs 78 may be deposited on the flexible sheet 44, for example, using an additive manufacturing process or any other suitable process for forming the flexible sheet 44 with the studs 78. The studs 78 include a stud body 82 projecting outward from the second side 60. The stud body 82 has a length L1. The length L1 extends between and to the second side 60 and a distal end 83 of the stud body 82 outward of the second side 60. The length L1 of the stud body 82 forms the liftoff distance LD between the eddy current probes 70 and the component surface 1006 with the stud body 82 contacting the component surface 1006 (see FIGS. 4 and 5). Accordingly, the length L1 may be equal to or substantially equal to (e.g., to compensate for eddy current probe 70 size) the liftoff distance LD. The stud body 82 may have a rounded or semispherical shape facing away from the second side 60 as shown, for example, in FIG. 8. The stud body 82 may be formed entirely or in substantial part by a low-friction material such as, but not limited to, Polytetrafluoroethylene (PTFE) (e.g., a material sold under the trade name TEFLON (E.I. Du Pont De Nemours and Co. of Wilmington, DE)). However, the present disclosure is not limited to any particular shape or material of the stud body 82.

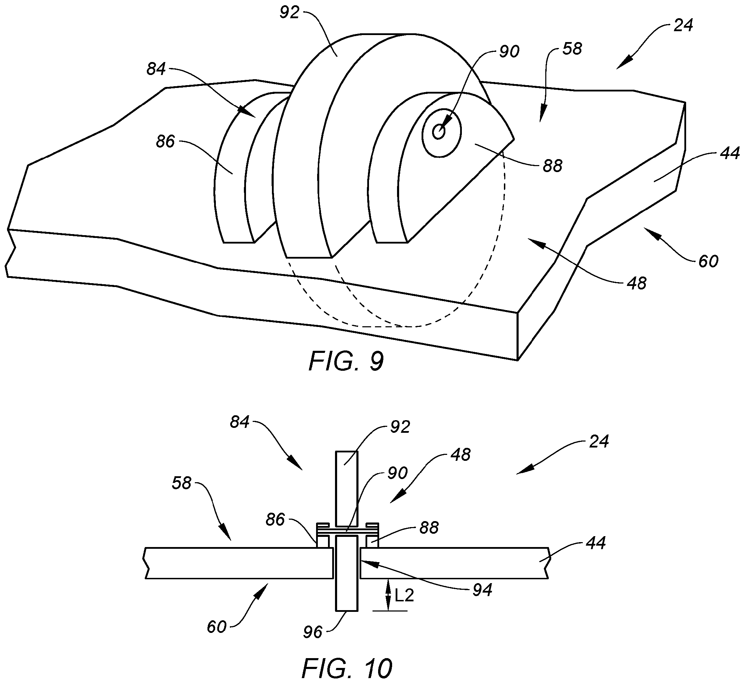

FIGS. 9 and 10 illustrate another exemplary configuration of the liftoff spacing assembly 48. The liftoff spacing assembly 48 of FIGS. 9 and 10 includes a plurality of roller assemblies 84. FIG. 9 illustrates a perspective view of a portion of the flexible sheet 44 with one of the roller assemblies 84. FIG. 10 illustrates a cutaway, front view of the flexible sheet 44 with one of the roller assemblies 84. Each of the roller assemblies 84 includes a first mount portion 86, a second mount portion 88, a shaft 90, and roller 92. The first mount portion 86 and the second mount portion 88 are disposed at (e.g., on, adjacent, or proximate) the first side 58 and positionally fixed relative to the flexible sheet 44. The first mount portion 86 and the second mount portion 88 may be mounted to the flexible sheet 44 at (e.g., on, adjacent, or proximate) the first side 58. Alternatively, the first mount portion 86 and the second mount portion 88 may be formed by the flexible sheet 44. The shaft 90 extends between and to the first mount portion 86 and the second mount portion 88. The roller 92 is rotatably mounted on the shaft 90. The roller 92 extends from the shaft 90 through the flexible sheet 44. For example, the roller 92 may extend through a roller aperture 94 formed by and through the flexible sheet 44 from the first side 58 to the second side 60. The roller 92 has a length L2. The length L2 extends between and to the second side 60 and a distal end 96 of the roller 92 outward of the second side 60. The length L2 forms the liftoff distance LD between the eddy current probes 70 and the component surface 1006 with the roller 92 (e.g., the distal end 96) contacting the component surface 1006 (see FIGS. 4 and 5). Accordingly, the length L2 may be equal to or substantially equal to (e.g., to compensate for eddy current probe 70 size) the liftoff distance LD. Each of the roller assemblies 84 may additionally include one or more bearings configured to facilitate rotation of the roller 92.

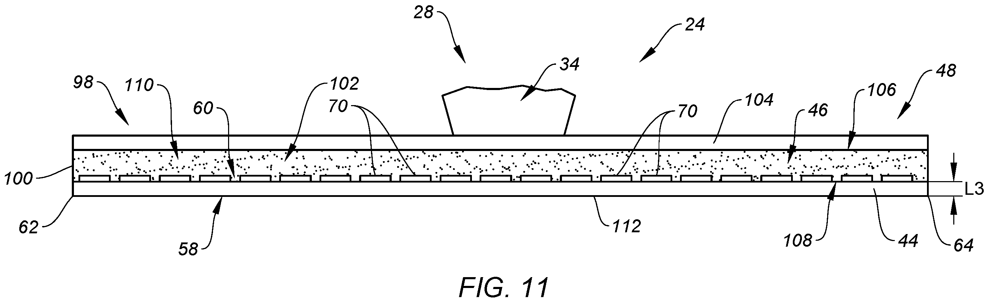

FIG. 11 illustrates another exemplary configuration of the flexible support structure 42 and the liftoff spacing assembly 48. FIG. 11 illustrates a cutaway, side view of a portion of the flexible sheet 44 and the deformable sleeve assembly 98. The deformable sleeve assembly 98 may form the flexible support structure 42 of FIG. 11. The flexible support structure 42 may additionally or alternatively include the plurality of pivot arms 50 (see FIG. 4). The deformable sleeve assembly 98 of FIG. 11 includes a sleeve 100, a deformable medium 102, and an inner flexible sheet 104. The sleeve 100 extends between and to an inner side 106 of the sleeve 100 and an outer side 108 of the sleeve 100. The inner side 106 is disposed at (e.g., on, adjacent, or proximate) or otherwise mounted to (e.g., bonded to) the inner flexible sheet 104. The outer side 108 is disposed at (e.g., on, adjacent, or proximate) the flexible sheet 44 (e.g., the second side 60) and the eddy current probes 70. The sleeve 100 may extend between and to or substantially between and to the first longitudinal end 62 and the second longitudinal end 64 (see FIG. 4). The sleeve 100 may extend between and to or substantially between and to the first lateral end 66 and the second lateral end 68 (see FIG. 5). The sleeve 100 surrounds and forms an internal cavity 110. The sleeve 100 is formed entirely or in substantial part by a flexible material such as, but not limited to, an elastomeric material. The deformable medium 102 is disposed within the internal cavity 110. Examples of the deformable medium 102 include air or other gas, liquids, gels, fine particulate, or the like configured to deform in response to an applied pressure (e.g., contact between the deformable sleeve assembly 98 and the component surface 1006). The inner flexible sheet 104 (e.g., the first side 58) of FIG. 11 is mounted to the robotic arm 28 at (e.g., on, adjacent, or proximate) the distal end 34. The inner flexible sheet 104 is disposed at (e.g., on, adjacent, or proximate) or otherwise mounted to (e.g., bonded to) the sleeve 100 (e.g., the inner side 106). The inner flexible sheet 104 is formed entirely or in substantial part by a flexible sheet material. Examples of the outer flexible sheet 104 material include polymeric materials (e.g., a thermoset or a thermoplastic polymer material). The flexible sheet 44 and the eddy current probes 70 of FIG. 11 may be oppositely orientated relative to the flexible sheet 44 and the eddy current probes 70 of FIGS. 4-10. For example, the second side 60 may face the inner flexible sheet 104 and the first side 58 may face away from the inner flexible sheet 104 such that the eddy current probes 70 are positioned between the flexible sheet 44 and the inner flexible sheet 104. Accordingly, the flexible sheet 44 may form the liftoff spacing assembly 48 of FIG. 11. The flexible sheet 44 of FIG. 11 has a length L3 extending between and to the first side 58 and the second side 60 with the first side 58 forming a distal end 112 of the flexible sheet 44. The length L3 forms the liftoff distance LD between the eddy current probes 70 and the component surface 1006 with the flexible sheet 44 (e.g., the first side 58) contacting the component surface 1006 (see FIGS. 4 and 5). Accordingly, the length L3 may be equal to or substantially equal to (e.g., to compensate for eddy current probe 70 size) the liftoff distance LD.

The controller 26 includes a processor 114 connected in signal communication with memory 116. The processor 114 may include any type of computing device, computational circuit, processor(s), CPU, computer, or the like capable of executing a series of instructions that are stored in the memory 116. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the inspection system 20 to accomplish the same algorithmically and/or by coordination of inspection system 20 components including the positioning assembly 22 and the eddy current probe assembly 24. The memory 116 may include a single memory device or a plurality of memory devices; e.g., a computer-readable storage device that can be read, written, or otherwise accessed by a general purpose or special purpose computing device, including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 26. The controller 26 may include, or may be in communication with, an input device that enables a user to enter data and/or instructions, and may include, or be in communication with, an output device configured, for example to display information (e.g., a visual display), or to transfer data, etc. A person of skill in the art will recognize that portions of the controller 26 may assume various forms (e.g., digital signal processor, analog device, etc.) capable of performing the functions described herein.

In operation, the eddy current probe assembly 24 and its liftoff spacing assembly 48 is positioned at (e.g., on, adjacent, or proximate) the component 1000 (e.g., the component surface 1006) as shown, for example, in FIG. 4. The controller 26 controls and directs electrical current (e.g., an alternating current (AC)) through the drive coil 72 for each of the eddy current probes 70 causing the drive coil 72 to form a moving and/or changing magnetic field (hereinafter an "incident magnetic field"). The core layer 76 may facilitate increased magnetic flux density of the incident magnetic field. Exposure of the electrically-conductive component body 1004 to the incident magnetic field generates eddy currents within the component body 1004. These eddy currents within the component body 1004 generate a second magnetic field (hereinafter an "induced magnetic field") in opposition to the incident magnetic field. Within the component body 1004, the flow of the eddy currents may be altered or disrupted by the presence of cracks or other defects in the component body 1004 material, thereby forming perturbations in the induced magnetic field. The presence of the sense coil 74 of one or more of the eddy current probes 70 within the induced magnetic field induces an electrical current flow within the respective one or more of the eddy current probes 70. The controller 26 is electrically connected to the sense coil 74 for each of the eddy current probes 70. The controller 26 is configured to measure an output voltage across the sense coil 74 for each of the eddy current probes 70. Using the output voltage, the controller 26 may determine an output voltage signal for each of the eddy current probes 70. The output voltage signals may be used to identify the presence or absence of cracks (e.g., subsurface cracks) or other defects of the component body 1004.

The positioning assembly 22 moves the eddy current probe assembly 24 along (e.g., on, adjacent, or proximate) the component 1000 (e.g., the component surface) to identify the presence or absence of cracks or other defects of the component body 1004 (see FIGS. 3 and 4). For example, the controller 26 may execute computer numeric control (CNC) instructions to facilitate automated control the positioning assembly 22 relative to the component 1000. As noted above, the eddy current probe assembly 24 may be moved along the component 1000 so as to maintain a predetermined liftoff distance LD between the eddy current probes 70 of the eddy current probe array 46 and the component surface 1006. For at least some eddy current probe assemblies of which we are aware, curvatures of a component surface, such as those found at the leading edge 1008 and the trailing edge 1010, may cause eddy current probes to move closer or farther from the component surface such that these conventional eddy current probe assemblies may not be able to identify the presence of cracks or other defects in a component. The present disclosure eddy current probe assembly 24 facilitates positioning of the eddy current probes 70 with a suitable liftoff distance LD to the component surface 1006 by causing the eddy current probe array 46 to conform to the component surface 1006 shape while also uniformly spacing the eddy current probes 70 from the component surface 1006 with the liftoff spacing assembly 48 configured to slide along the component surface 1006. For example, the configuration of the flexible support structure 42 with the flexible sheet 44 (or alternatively the configuration of the deformable sleeve assembly 98 of FIG. 11) causes the eddy current probe array 46 to conform to the component surface 1006 shape as the eddy current probe assembly 24 is positioned in contact with (e.g., pressed against) the component surface 1006. The liftoff spacing assembly 48 slides along the curvature of the component surface 1006 while spacing each of the eddy current probes 70 at an optimal liftoff distance LD from the component surface 1006 for identifying cracks and other defects of the component body 1004, such that output voltage signals of the eddy current probes 70, in the presence of a crack or other defect, have a sufficiently high signal strength that the crack or other defect may be identified by the controller 26. The small diameter D1 and edge-to-edge distance D2 features of the eddy current probe array 46 described herein facilitate greater liftoff distance LD tolerance of the eddy current probe array 46, thereby facilitating more robust identification of component body 1004 cracks and other defects for complex contour surface inspections.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An eddy current probe assembly comprising:
a flexible sheet (44) extending between and to a first side (58) and a second side (60);
an eddy current probe array (46) including a plurality of eddy current probes (70) disposed at the second side (60); and
a liftoff spacing assembly (48) disposed at the plurality of eddy current probes (70), wherein the liftoff spacing assembly (48) forms a liftoff distance (LD) between the plurality of eddy current probes (70) and a distal end (83) of the liftoff spacing assembly (48).

2. The eddy current probe assembly of claim 1, wherein the liftoff spacing assembly (48) includes a plurality of studs (78) disposed at the second side (60), each stud of the plurality of studs (78) includes a stud body (82) extending a length (L1) from the flexible sheet (44) to the distal end (83), and the length (L1) forms at least a portion of the liftoff distance (LD).

3. The eddy current probe assembly of claim 2, wherein each stud (78) of the plurality of studs (78) further includes a threaded fastener (80) engaged with the flexible sheet (44).

4. The eddy current probe assembly of any preceding claim, wherein the liftoff spacing assembly (48) includes a plurality of roller assemblies (84), each roller assembly (84) of the plurality of roller assemblies (84) includes a roller (92) extending a length (L2) from the flexible sheet (44) to the distal end (83), and the length (L2) forms at least a portion of the liftoff distance (LD).

5. The eddy current probe assembly of claim 4, wherein each roller assembly (84) of the plurality of roller assemblies (84) further includes a first mount portion (86), a second mount portion (88), and a shaft (90), the first mount portion (86) and the second mount portion (88) are disposed at the first side (58), the shaft (90) extends between and to the first mount portion (86) and the second mount portion (88), the roller (92) is rotatably mounted on the shaft (90), and the roller (92) extends through the flexible sheet (44) to the distal end (83).

6. The eddy current probe assembly of any preceding claim, further comprising a sleeve (100), a deformable medium (102), and an inner flexible sheet (44), the sleeve (100) extends between and to an inner sleeve side (106) and an outer sleeve side (108), the outer sleeve side (108) is disposed at the flexible sheet (44), the sleeve (100) surrounds and forms an internal cavity (110), the deformable medium (102) is disposed within the internal cavity (110), and the inner flexible sheet (44) is disposed at the inner sleeve side (106).

7. The eddy current probe assembly of any preceding claim, wherein the plurality of eddy current probes (70) have an average probe diameter (D1) less than 0.8 mm.

8. The eddy current probe assembly of any preceding claim, wherein the plurality of eddy current probes (70) have an average edge-to-edge distance (D2) between 0.05 mm and 0.2 mm.

9. The eddy current probe assembly of any preceding claim, further comprising a flexible support structure (42), wherein the flexible support structure (42) includes a plurality of rotatable pivot arms (50) mounted to the flexible sheet (44) at the first side (58).

10. The eddy current probe assembly of claim 9, wherein the plurality of rotatable pivot arms (50) includes a primary pivot arm (50A), a plurality of secondary pivot arms (50B), and a plurality of tertiary pivot arms (50C), each secondary pivot arm (50B) of the plurality of secondary pivot arms (50B) is rotatably mounted to the primary pivot arm (50A), each tertiary pivot arm (50C) of the plurality of tertiary pivot arms (50C) is rotatably mounted to one secondary pivot arm (50B) of the plurality of secondary pivot arms (50B), and each tertiary pivot arm (50C) of the plurality of tertiary pivot arms (50C) is mounted on the flexible sheet (44) at the first side (58).

11. The eddy current probe assembly of any preceding claim, wherein the eddy current probe array (46) further includes an electrically-conductive core layer (76) disposed at the first side (58).

12. The eddy current probe assembly of any preceding claim, further comprising a controller (26) including a processor (114) in communication with a non-transitory memory (116) storing instructions, which instructions when executed by the processor (114), cause the processor (114) to:
measure an output voltage of a sense coil (74) of each eddy current probe (70) of the plurality of eddy current probes (70), optionally wherein the instructions, when executed by the processor (114), further cause the processor (114) to:
direct an electrical current flow through the drive coil (72) of each eddy current probe (70) of the plurality of eddy current probes (70).

13. An eddy current probe assembly comprising:
a flexible sheet (44) extending between and to a first side (58) and a second side (60);
an eddy current probe array (46) including a plurality of eddy current probes (70) disposed on the flexible sheet (44), wherein each eddy current probe (70) of the plurality of eddy current probes (70) includes a drive coil (72) and a sense coil (74);
a liftoff spacing assembly (48) mounted to the flexible sheet (44), wherein the liftoff spacing assembly (48) extends a length (L1) from the flexible sheet (44) to a distal end (83) of the liftoff spacing assembly (48) outward of the flexible sheet (44) and the eddy current probe array (46); and
a controller (26) including a processor (114) in communication with a non-transitory memory (116) storing instructions, which instructions when executed by the processor (114), cause the processor (114) to:
direct an electrical current flow through the drive coil (72) of each eddy current probe (70) of the plurality of eddy current probes (70); and
measure an output voltage of the sense coil (74) of each eddy current probe of the plurality of eddy current probes (70), optionally further comprising a sleeve (100), a deformable medium (102), and an inner flexible sheet (44), the sleeve (100) extends between and to an inner sleeve side (106) and an outer sleeve side (108), the outer sleeve side (108) is disposed at the second side (60), the sleeve (100) surrounds and forms an internal cavity (110), the deformable medium (102) is disposed within the internal cavity (110), and the inner flexible sheet (44) is disposed at the inner sleeve side (106).

14. The eddy current probe assembly of claim 13, wherein:
the liftoff spacing assembly (48) includes a plurality of studs (78) disposed at the second side (60), and each stud of the plurality of studs (78) includes a stud body (82) extending the length from the flexible sheet (44) to the distal end (83); and/or
the liftoff spacing assembly (48) includes a plurality of roller assemblies (84), and each roller assembly (84) of the plurality of roller assemblies (84) includes a roller (92) extending the length from the flexible sheet (44) to the distal end (83).

15. An eddy current probe assembly comprising:
a flexible support structure (42);
a flexible sheet (44) mounted to the flexible support structure (42), and the flexible sheet (44) extends between and to a first side (58) and a second side (60);
an eddy current probe array (46) including a plurality of eddy current probes (70) disposed on the flexible sheet (44); and
a liftoff spacing assembly (48) mounted to the flexible sheet (44), wherein the liftoff spacing assembly (48) forms a liftoff distance (LD) between the plurality of eddy current probes (70) and a distal end (83) of the liftoff spacing assembly (48), optionally wherein:
the flexible support structure (42) includes a plurality of rotatable pivot arms (50), the plurality of rotatable pivot arms (50) includes a primary pivot arm (50A), a plurality of secondary pivot arms (50B), and a plurality of tertiary pivot arms (50C), each secondary pivot arm (50B) of the plurality of secondary pivot arms (50B) is rotatably mounted to the primary pivot arm (50A), each tertiary pivot arm (50C) of the plurality of tertiary pivot arms (50C) is rotatably mounted to one secondary pivot arm (50B) of the plurality of secondary pivot arms (50B), and each tertiary pivot arm (50C) of the plurality of tertiary pivot arms (50C) is mounted on the flexible sheet (44) at the first side (58); and/or
the liftoff spacing assembly (48) includes one or more layers of Polytetrafluoroethylene (PTFE) tape disposed at the second side (60) and on the plurality of eddy current probes (70).
